Europäisches Patentamt

European Patent Office

Office européen des brevets

(11) Numéro de publication : **0 369 910 B1**

# FASCICULE DE BREVET EUROPEEN

(12)

(45) Date de publication du fascicule du brevet :
**01.04.92 Bulletin 92/14**

(21) Numéro de dépôt : **89440006.8**

(22) Date de dépôt : **23.01.89**

(51) Int. Cl.⁵ : **A01K 3/00,** H01B 5/00,
H01B 5/12

(54) **Ruban électrifié pour clôtures d'enclos.**

(30) Priorité : **24.10.88 FR 8814962**

(43) Date de publication de la demande :
**23.05.90 Bulletin 90/21**

(45) Mention de la délivrance du brevet :
**01.04.92 Bulletin 92/14**

(84) Etats contractants désignés :
**BE CH DE GB IT LI NL SE**

(56) Documents cités :
**EP-A- 0 256 841
EP-A- 0 274 454
FR-A- 625 026**

(73) Titulaire : **S.A. SCHOUTTETEN & FROIDURE
58-60 route d'Armentières
F-59560 Comines (Nord) (FR)**
Titulaire : **S.A. COPEL INDUSTRIE
261 Avenue Victor Hugo
F-59116 Houplines (Nord) (FR)**

(72) Inventeur : **Schoutteten, Bruno
58-60 Route d'Armentières
F-59560 Comines (Nord) (FR)**

(74) Mandataire : **Descourtieux, Philippe et al
CABINET BEAU de LOMENIE 55 rue
d'Amsterdam
F-75008 Paris (FR)**

## Description

L'invention est relative à un ruban électrifié qui trouvera notamment son application dans le domaine agricole pour les clôtures d'enclos.

Pour garder le bétail dans un pâturage, les agriculteurs utilisent de plus en plus fréquemment une clôture électrifiée disposée tout autour de la pâture. L'avantage de la clôture électrifiée par rapport au simple fil de fer barbelé est que le bétail est repoussé par la présence de la haute tension et donc il ne risque pas de venir se blesser accidentellement en s'approchant trop près de la clôture.

Pour des questions de sécurité, la haute tension utilisée se présente sous la forme d'une charge capacitive et par conséquent, tout contact avec la clôture maintenue à un potentiel élevé par rapport à la terre provoque une décharge de très faible intensité ne suscitant aucun danger, tant pour l'homme que l'animal.

Quoiqu'il soit encore largement utilisé, le fil de fer barbelé et électrifié présente de nombreux inconvénients. Tout d'abord il est difficile à poser car il est très raide, ensuite son emploi est totalement exclu pour former une clôture provisoire car il est très difficile à enrouler. Enfin, de par sa conception même, ce type de clôture présente des dangers d'autant plus qu'elle ne dispose pas d'une bonne visibilité.

C'est pourquoi, dans de nombreuses applications, elle est remplacée par un simple fil métallique à qui l'on peut reprocher d'être peu visible. C'est pourquoi les constructeurs ont développé des produits très commodes d'utilisation, qui se présentent sous la forme d'un ruban électrifié. Le ruban est à la fois léger et large pour être visible. Il doit être confectionné dans un matériau voyant, résistant et imputrescible. Ce sont des propriétés que l'on retrouve avec les matériaux synthétiques mais qui ne sont pas conducteurs de l'électricité. C'est pourquoi il faut associer des matières plastiques telles que polyéthylène ou autre avec fil métallique pour obtenir un ruban électrifié.

L'expérience a montré qu'il faut utiliser plusieurs fils métalliques pour pouvoir pallier à toute rupture accidentelle de l'un d'entre eux.

Actuellement , on connaît les rubans tissés pour lesquels on utilise généralement trois fils métalliques disposés en chaîne. Cette conception est fragile. En effet, en cas de traction sur le ruban, ce sont les fils de chaîne les moins élastiques qui encaissent l'effort,en l'occurrence ici les trois fils métalliques. Dans le document EP.A.0256841 le ruban électrifié comporte deux types de fil conducteur, incorporés longitudinalement dans une armature souple du type chaîne et trame. En cas de traction sur le ruban, le fil du premier type qui est dans un métal ou alliage présentant une forte résistance dynamométrique protège le fil du second type qui est dans un métal ou alliage ayant une meilleure conductivité électrique. Cependant la mauvaise répartition de l'effort de traction a obligé les constructeurs à mettre au point une autre structure pour la confection du ruban électrifié.

Il s'agit du tressage dans lequel des fils conducteurs sont incorporés. Etant donné que ces fils conducteurs ne sont pas disposés longitudinalement dans le ruban tressé, ils peuvent se donner en cas d'allongement sous l'effet de la traction. Par conséquent, ce type de ruban est résistant. Toutefois, le tressage présente la particularité de subir des déformations permanentes , en particulier lorsque l'on tire sur une tresse, on provoque un resserrage des fils qui entraîne une diminution en largeur du ruban et lorsque l'on cesse la traction, le ruban ne revient pas à sa largeur d'origine. Ceci est particulièrement gênant lorsque l'on souhaite garder une bonne visibilité du ruban. Des essais ont montré que le ruban pouvait perdre jusqu'à 50% de sa largeur, ce qui occasionne également un allongement irréversible.

Le but principal de la présente invention est de présenter un ruban électrifié dont l'armature souple soit indéformable de telle sorte que sa largeur et sa longueur soient invariables dans le temps. Ceci garantit la visibilité à terme du ruban électrifié qui, contrairement au ruban tressé, ne s'affaiblit pas en largeur.

Par ailleurs, le réseau de conducteurs électriques employé pour électrifier le ruban est protégé vis-à-vis des contraintes mécaniques externes. Toute traction sur le ruban se répercute sur l'armature souple et non sur les conducteurs électriques. Ainsi, le ruban électrifié de l'invention présente une grande longévité et sécurité de fonctionnement.

Le réseau de conducteurs électriques employé est disposé de telle sorte qu'en cas de rupture accidentelle de l'un des conducteurs électriques, la défaillance est immédiatement prise en charge par les autres conducteurs.

Le ruban électrifié de l'invention est très commode d'utilisation, il peut être posé et retiré très facilement, il convient tout particulièrement pour la formation de clôtures provisoires.

D'autres buts et avantages de la présente invention apparaîtront au cours de la description qui va suivre, qui n'est cependant donnée qu'à titre indicatif et qui n'a pas pour but de la limiter.

Le ruban électrifié pour clôture d'enclos, formé d'une armature souple dans laquelle est intégré un réseau de conducteurs électriques est caractérisé par le fait que l'armature présente des moyens de stabilisation du réseau.

L'invention sera mieux comprise à la lecture de la description suivante accompagnée des dessins en annexe, parmi lesquels :

la figure 1 illustre la mise en place du réseau de conducteurs électriques sur la texture de base du ruban,

la figure 2 représente en vue de détail la texture trame chaîne de l'armature souple du ruban électrifié,

la figure 3 représente des mailles de chaîne utilisées pour fixer la texture et le réseau de conducteurs électriques dans le ruban électrifié,

la figure 4 représente la mise en place des conducteurs latéraux dans les mailles en chaîne.

L'invention vise un ruban électrifié qui trouvera notamment son application dans le domaine agricole pour les clôtures d'enclos à bétail.

Quoique l'invention ait été spécialement développée dans le cadre des clôtures électrifiées, d'autres applications sont envisageables où il s'agit d'associer conducteurs électriques non isolés et support souple très résistant tel que des antennes de radio, par exemple.

L'une des qualités essentielles, outre la solidité, d'un ruban électrifié pour clôture d'enclos, est sa visibilité. Cette caractéristique manque totalement au simple fil électrique conducteur métallique tendu entre des piquets. C'est pourquoi les constructeurs ont imaginé d'associer un réseau de conducteurs électriques avec un support visible et souple tel qu'un ruban confectionné dans un matériau synthétique tel que polyéthylène.

Une des difficultés rencontrées est la fixation du réseau de conducteurs électriques sur le ruban. Les films doivent être totalement écartés et l'on doit associer des fils électriques de faible diamètre liés dans une armature de fils souples associés de sorte à former un ruban tissé par exemple.

L'inconvénient du tissage est que les conducteurs électriques présentent un très faible coefficient d'allongement comparé au film de polyéthylène et en cas de traction sur le ruban, l'effort est totalement encaissé par les fils métalliques qui peuvent se rompre en cas de surcharge.

C'est pourquoi certains fabricants emploient une armature souple en fils de polyéthylène tressés dans lesquels sont intégrés des fils métalliques conducteurs pour former un ruban. Toutefois, cette structure est instable en largeur. En cas de traction sur le ruban, les fils se resserrent et la déformation est permanente. On peut assister jusqu'à des rétrécissements en largeur de l'ordre de 50 % du ruban, ce qui engendre une diminution sensible de la visibilité.

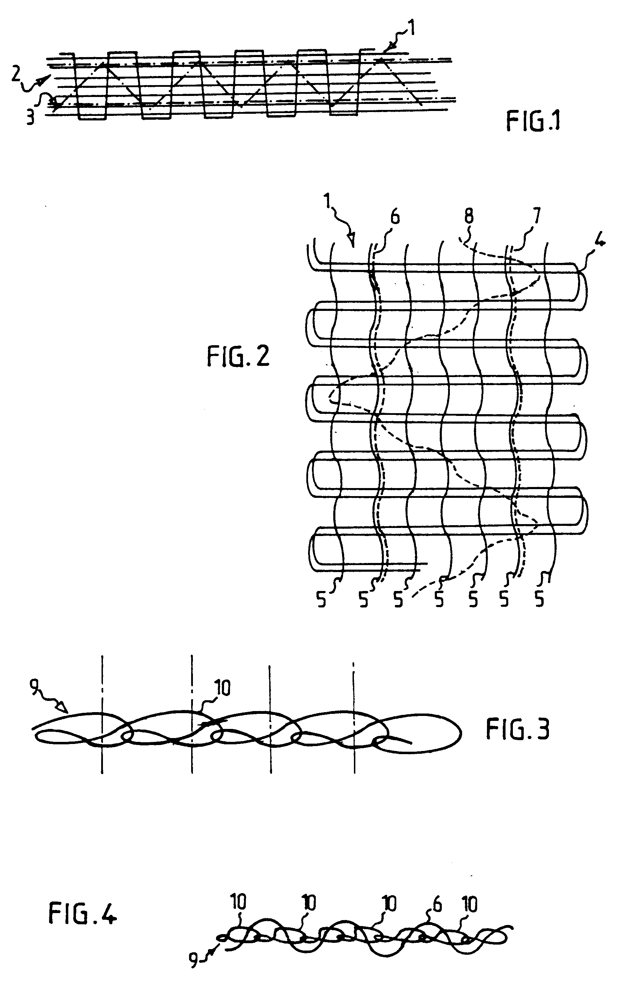

Précisément, la figure 1 représente le ruban électrifié (1) qui se compose d'une armature souple (2) dans laquelle est intégré un réseau de conducteurs électriques (3). Selon l'invention, l'armature souple (2) présente des moyens de stabilisation dimensionnelle du réseau (3). C'est-à-dire que les efforts de traction sur le ruban (1) n'engendrent aucune diminution de largeur, de même que les efforts de traction ne sont pas répercutés dans les conducteurs électriques.

De la sorte, il y a une réelle dissociation des fonctions entre l'armature chargée de supporter les contraintes et de présenter une surface visible, et les conducteurs électriques qui permettent de porter le ruban à un potentiel électrique élevé.

Les moyens de stabilisation dimensionnelle du réseau de conducteurs électriques se présentent sous la forme d'une texture trame chaîne entrecroisée telle qu'illustrée à la figure 2. La trame (4) est formée par un double fil continu qui présente des ondulations s'étendant sur toute la largeur du ruban (1). Un nombre différent de fils en trame aurait pu également être utilisé sans pour autant sortir du cadre de la présente invention. Cette disposition transversale des fils de trame (4) donne une stabilité dimensionnelle en largeur du ruban (1). En pratique, les contraintes susceptibles d'être rencontrées dans le sens transversal sont faibles et l'utilisation d'un double fil est largement suffisante.

Les fils de chaîne (5) sont entrelacées avec les fils de trame (4) sans serrage de sorte que l'ensemble soit aéré.

Le réseau de fils conducteurs (3) se compose de deux conducteurs latéraux respectivement (6 et 7) et d'un conducteur disposé en zig-zag (8) qui s'étend sur la largeur du ruban (1) tel qu'illustré à la figure 2. Le conducteur central (8) disposé en zig-zag établit des contacts réguliers entre les conducteurs latéraux (6 et 7). Le fil conducteur utilisé est par exemple du type inox de diamètre vingt centièmes de millimètres.

La texture trame (4) et chaîne (5) est liée par une chaîne tricotée (9) telle qu'illustrée à la figure 3 non représentée à la figure 2. Les mailles (10) de la chaîne (9) enferment chaque entrecroisement de la trame (4) avec les fils de chaîne (5) de telle sorte à bloquer la texture. En outre, les fils conducteurs électriques (6, 7 et 8) du réseau (3) traversent également les mailles (10) de la chaîne tricotée (9) de sorte à être fixés sur la texture.

Les conducteurs électriques latéraux (6 et 7) sont ondulés de sorte qu'ils traversent alternativement les mailles (10) de la chaîne (9) tels qu'illustrés à la figure 4. De la sorte, les conducteurs électriques latéraux ne sont pas posés tendus dans le sens longitudinal du ruban et toute traction sur ce dernier n'engendre aucune contrainte dans les conducteurs. Seule, une déformation des ondulations est enregistrée en raison de l'élasticité des fils de trame.

Le conducteur central en zig-zag (8), de par sa disposition en biais, est également à l'abri de contraintes de traction sur le ruban (1). Il est disposé entre les mailles (10) de la chaîne tricotée (9) de telle sorte que le fil conducteur (8) se décale d'un fil de chaîne (5) à chaque double trame (4), tel qu'illustré à la figure 2.

Pour assurer le contact électrique entre les conducteurs latéraux (6 et 7) et le conducteur central, les fils (6, 7, 8) traversent les mêmes mailles (10) au passage des trames (4) correspondantes. Etant enserrés dans la même maille, le contact électrique est établi.

## Revendications

1. Ruban électrifié pour clôture d'enclos, formé d'une armature souple (2) se présentant sous la forme d'une texture chaîne (5) et trame (4) entrecroisées et dans laquelle est intégré un réseau de conducteurs électriques (3) caractérisé en ce qu'il comporte des moyens de stabilisation dimensionnelle du réseau consistant en une chaîne tricotée (9) liant ladite trame (4) et ladite chaîne (5) et dont les mailles (10) enferment les fils du réseau de conducteurs électriques (3).

2. Ruban électrifié, selon la revendication 1, caractérisé par le fait que le réseau de conducteurs électriques (3) se compose de deux conducteurs latéraux (6 et 7) et d'un conducteur central (8) disposé en zig-zag qui s'étend sur la largeur du ruban (1).

3. Ruban électrifié, selon la revendication 2, caractérisé par le fait que les conducteurs latéraux (6 et 7) présentent des ondulations.

4. Ruban électrifié, selon la revendication 1, caractérisé par le fait que la texture comporte un double fil (4) en trame.

5. Ruban électrifié, selon la revendication 4, caractérisé par le fait que le conducteur (8) en zig-zag se décale d'un fil de chaîne (5) à chaque double trame (4).

6. Ruban électrifié, selon la revendication 2, caractérisé par le fait que les conducteurs latéraux (6 et 7) et en zig-zag (8) traversent les mêmes mailles (10) au passage des trames (4) correspondantes.

7. Ruban électrifié, selon la revendication 3, caractérisé par le fait que les conducteurs latéraux (6 et 7) traversent alternativement les mailles (10) de la chaîne tricotée (9).

8. Ruban électrifié selon la revendication 4, caractérisé par le fait que les mailles (10) de la chaîne tricotée (9) bloquent chaque entrecroisement des fils de chaîne (5) et trame (4).

## Claims

1. Electrified tape for enclosure fences, made up of a flexible armature (2) which is in the form of a texture of an interlaced warp (5) and weft (4) texture and in which is incorporated a network of electric wires (3), characterized in that it comprises means for imparting dimensional stability to the network, which means consist in a knitted warp (9) linking said weft (4) and said warp (5) and of which the stitches (10) encompass the wires of the network of electric conductors (3).

2. Electrified tape according to claim 1, characterized by the fact that the network of electric conductors (3) is composed of two lateral conductors (6 and 7) and of a central conductor (8) of zig-zag configuration which extends through the width of the tape (1).

3. Electrified tape according to claim 2, characterized by the fact that the lateral conductors (6 and 7) are corrugated.

4. Electrified tape according to claim 1, characterized by the fact that the texture comprises a double weft yarn (4).

5. Electrified tape according to claim 4, characterized by the fact that the zig-zag shaped conductor (8) is shifted by one warp yarn (5) at each double weft yarn (4).

6. Electrified tape according to claim 2, characterized by the fact that the lateral conductors (6 and 7) and zig-zag shaped (8) conductors extend through the same stitches (10) across the corresponding weft yarns (4).

7. Electrified tape according to claim 3, characterized by the fact that the lateral conductors (6 and 7) extend alternatively through the stitches of the knitted warp (9).

8. Electrified tape according to claim 4, characterized by the fact that the stitches (10) of the knitted warp (9) lock each intersection of the warp (5) and weft (4) yarns.

## Patentansprüche

1. Elektrifiziertes Band für Zäune, gebildet aus einer biegsamen Bewehrung (2), die in Form einer Struktur aus Kette (5) und Schuß (4), überkreuzt, vorliegt, und in der ein Netz von elektrischen Leitern (3) integriert ist, **dadurch gekennzeichnet**, daß es Abmessungsstabilisierungseinrichtungen des Netzes aufweist, bestehend aus einer gewirkten Kette (9), die den Schuß (4) und die Kette (5) verbindet, und deren Maschen (10) die Fäden des elektrischen Leiternetzes (3) einschließt.

2. Elektrifiziertes Band, nach Anspruch 1, **dadurch gekennzeichnet**, daß das Netz von elektrischen Leitern (3) sich zusammensetzt aus zwei seitlichen Leitern (6 und 7) und einem Mittenleiter (8), angeordnet in Zick-Zack-Form, der sich über die Breite der Bahn (I) erstreckt.

3. Elektrifiziertes Band, nach Anspruch 2, **dadurch gekennzeichnet**, daß die seitlichen Leiter (6 und 7) Wellenformen aufweisen.

4. Elektrifiziertes Band, nach Anspruch 1, **dadurch gekennzeichnet**, daß die Struktur einen doppelten Faden (4) als Schuß aufweist.

5. Elektrifiziertes Band, nach Anspruch 4, **dadurch gekennzeichnet**, daß der Leiter (8) in Zick-Zack-Form um einen Kettfaden (5) an jedem doppelten Schuß (4) versetzt ist.

6. Elektrifiziertes Band, nach Anspruch 2, **dadurch gekennzeichnet**, daß die seitlichen Leiter (6 und 7) und der Leiter in Zick-Zack-Form (8) dieselben Maschen (10) beim Hindurchtritt der entsprechenden Schußfäden (4) durchqueren.

7. Elektrifiziertes Band, nach Anspruch 3, **dadurch gekennzeichnet**, daß die seitlichen Leiter (6 und 7) abwechselnd die Maschen (10) der gewirkten Kette (9) durchqueren.

8. Elektrifiziertes Band, nach Anspruch 4, **dadurch gekennzeichnet**, daß die Maschen (10) der gewirkten Kette (9) jedes Überkreuzen der Kettfäden (5) und Schußfäden (4) blockieren.

FIG.1

FIG. 2

FIG.3

FIG.4